# EUROPÄISCHE PATENTSCHRIFT

(11) **EP 3 848 767 B1**
(45) Veröffentlichungstag und Bekanntmachung des Hinweises auf die Patenterteilung: **01.11.2023**
(21) Anmeldenummer: 20151540.0
(22) Anmeldetag: 13.01.2020
(51) Int. Cl.: G05B 19/418, G01B 21/00

(54) **VERFAHREN ZUR QUALITÄTSKONTROLLE VON WERKSTÜCKEN SOWIE KOORDINATENMESSGERÄT UND COMPUTERPROGRAMM**
METHOD FOR QUALITY CONTROL OF WORKPIECES AND COORDINATE MEASURING DEVICE AND COMPUTER PROGRAM
PROCÉDÉ DE CONTRÔLE QUALITÉ DE PIÈCES AINSI QU'APPAREIL DE MESURE DE COORDONNÉES ET PROGRAMME INFORMATIQUE

(43) Veröffentlichungstag der Anmeldung: 14.07.2021
(73) Patentinhaber: Hexagon Technology Center GmbH, 9435 Heerbrugg (CH)
(72) Erfinder: WAGNER, Michael, 68649 Gross-Rohrheim (DE)
(74) Vertreter: Knefel, Cordula

(56) Entgegenhaltungen:
- US-A1- 2006 047 457
- US-A1- 2008 109 089
- US-A1- 2009 005 896
- US-B1- 6 766 214

## Beschreibung

Die Erfindung betrifft ein Verfahren zur Qualitätskontrolle von Werkstücken mit verschiedenen Merkmalen und/oder verschiedenen Merkmalsparametern gemäß dem Oberbegriff des Anspruches 1 sowie ein Koordinatenmessgerät und ein Computerprogramm, mit denen das erfindungsgemäße Verfahren ausgeführt werden kann.

In allen Industrie- und Wirtschaftssektoren entstehen durch ganz unterschiedliche Prozesse ständig die verschiedensten Produkte sowohl für das tägliche Leben also auch für anspruchsvolle Bedürfnisse. Jede Abweichung von einem optimalen Prozessverlauf kann für das den Prozess ausführende Unternehmen zu einem zumindest indirekt sich als finanziellen Verlust auswirkenden Nachteil führen. Es ist deshalb von großer Wichtigkeit, diese Prozesse so zu lenken und zu überwachen, dass sie ohne Störungen arbeiten und die gewünschten Produkte mit der geforderten Qualität liefern.

Zweck einer Prozessbeurteilung ist es, anhand von ausgewählten Messwerten fundierte Kenntnisse über einen Prozess zu gewinnen. Ausgehend von diesen Kenntnissen kann dann der Prozess effizient und effektiv so gelenkt werden, dass die von ihm realisierten Produkte oder Dienstleistungen die vorgegebenen Qualitätsforderungen erfüllen. Eine Prozessbeurteilung ist dabei stets die Beurteilung nach vorgegebenen Kriterien von einem oder mehreren Merkmalen, die als bedeutsam für den Prozess ausgewählt wurden. Es ist allerdings für die praktische Durchführung einer Prozessbeurteilung oft einfacher, statt schwer erfassbarer Prozessmerkmale die damit korrelierenden Produktmerkmale zu messen und zu erfassen.

Die betrachteten Merkmalswerte werden dabei typischerweise aus Stichproben ermittelt, die als repräsentativ für das zu betrachtende Prozessmerkmal bzw. das korrelierende Produktmerkmal angesehen werden. Für die zur Prozessbeurteilung herangezogenen Merkmale werden dann aussagekräftige Qualitätsfähigkeitskenngrößen mittels statistischer Methoden aus den stichprobenartig gemessenen Merkmalswerten berechnet.

In den verschiedenen Industrie- und Wirtschaftssektoren können die einzelnen Prozessmerkmale außerordentlich unterschiedlich und vielfältig sein. Darüber hinaus können einzelne Prozess- oder Produktmerkmale sehr unterschiedliche Verteilungen von Merkmalswerten oder völlig unterschiedliche zeitliche Entwicklungen dieser Verteilungen aufweisen.

Prozessbeurteilungen und Entscheidungen sind häufig mit hohen finanziellen und organisatorischen Folgen verbunden, wenn umfangreiche und komplexe Fertigungsanlagen für die Produktherstellung notwendig sind. So können beispielsweise die Kosten einzelner Fertigungsmaschinen der Automobilindustrie leicht mehrstellige Millionenbeträge ausmachen, die Entscheidung, ob eine bestimmte Fertigungsanlage die vom Automobilhersteller vorgegebenen Qualitätsforderungen erfüllt, muss anhand der Ergebnisse weniger Testproduktionsläufe ermittelt werden. Stellt sich später heraus, dass die gekaufte Fertigungsanlage die Qualitätsforderungen nicht erfüllt und beispielsweise die Produkte mangelhaft sind oder die Anlage hohe Ausfallszeiten aufweist, so muss nicht nur die betroffene Fertigungsanlage verbessert oder ersetzt werden. Durch die verzögerte oder mangelhafte Herstellung einzelner Bauteile können beispielsweise verbindliche Lieferzusagen nicht eingehalten werden, die Produktionslinien ganzer Automobilwerke ins Stocken geraten oder aufwendige Rückholaktionen von fehlerhaften Teilen mit einem damit verbundenen Imageverlust notwendig werden.

Die Berechnung einzelner Kenngrößen aus stichprobenartig gemessenen Merkmalswerten erfolgt üblicherweise mit Hilfe von bekannten statistischen Methoden.

Zum Stand der Technik (WO 02/091 087 A2) gehört ein Verfahren zur automatisierten Berechnung von Qualitätsfähigkeitskenngrößen für die Beurteilung eines Produktionsprozesses, bei dem möglichst wenige vorgegebene Verteilungsmodelle entscheidungsrelevante Merkmale eines Produktionsprozesses möglichst gut beschreiben sollen.

Darüber hinaus ist das sogenannte Skip-Lot-Verfahren gemäß der DIN ISO 2859-3 bekannt. Die DIN ISO 2859-3 legt allgemeine Skip-Lot-Verfahren zur Annahmestichprobenprüfung anhand der Anzahl fehlerhafter Einheiten oder Fehler (Attributprüfung) fest. Diese Verfahren wurden entwickelt, um den Aufwand für die Prüfung von Produkten hoher Qualität zu verringern. Bei diesem Verfahren wird der Prüfaufwand verringert, und zwar dadurch, dass bei einer vorgegebenen Wahrscheinlichkeit zufällig entschieden wird, ob ein Los aus einer bestimmten Anzahl der hergestellten Produkte ohne Prüfung angenommen wird oder nicht. Es erfolgt hier eine Zufallsauswahl von Losen.

Dieses zum Stand der Technik gehörende Verfahren zur Qualitätskontrolle von Werkstücken mit verschiedenen Merkmalen und/oder verschiedenen Merkmalsparametern zielt darauf ab, dass eine Stichprobenprüfung der Merkmale und/oder Merkmalsparameter durchgeführt wird. Es werden zu Beginn die zu messenden Merkmale und/oder Merkmalsparameter für die Stichprobenprüfung festgelegt. Darüber hinaus wird eine Losgröße eines Loses festgelegt und die festgelegten Merkmale und/oder Merkmalsparameter werden stichprobenartig in Abhängigkeit von der Losgröße gemessen. Das bedeutet, dass beispielsweise eine Losgröße von 500 Stück zu Beginn festgelegt wird. Das heißt, dass die Merkmale und/oder Merkmalsparameter jedes 500. Teiles gemessen werden. Liegen bei dieser Messung die Messwerte innerhalb vorgegebener Toleranzwerte, und zwar beispielsweise für drei aufeinanderfolgende Lose, so wird die Prüffrequenz reduziert, so dass beispielsweise nur noch jedes 1.000. Teil gemessen wird. Wird festgestellt, dass die Messdaten der Merkmale oder Merkmalsparameter nicht in den vorgebebenen Toleranzbereichen liegen, so wird die Prüffrequenz erhöht. Gemäß dem Stand der Technik wird die Prüffrequenz für das gesamte Teil mit sämtlichen Merkmalen oder Merkmalsparametern erhöht.

Üblicherweise wird mit einer Vollprüfung begonnen (100 % Prüfungen). Diese Prüfungen werden in Abhängigkeit von dem Ergebnis der Prüfungen der vorhergehenden Lose reduziert bis zum sogenannten Skip-Lot (0 % Prüfungen).

Dieses zum Stand der Technik gehörende Skip-Lot-Verfahren bezieht sich nicht auf einzelne Merkmale oder Merkmalsgruppen, sondern lediglich darauf, den gesamten Prüfungsaufwand zu reduzieren. Dabei werden die Prozessfähigkeitskennwerte der einzelnen Merkmale herangezogen.

Weiterhin gehört zum Stand der Technik (US 2006/0047457 A1) ein Verfahren zur Priorisierung einer Teilemessung, bei der die zu messenden Merkmale in zwei Gruppen unterteilt werden, nämlich in empfindliche Merkmale und nicht-empfindliche Merkmale, wobei die nicht-empfindlichen Merkmale weiter unterteilt werden in eine Vielzahl von Gruppen. Dieses zum Stand der Technik gehörende Verfahren kann weiter verbessert werden.

Darüber hinaus gehört zum Stand der Technik (US 2008/0109089 A1) ein Prozesssteuerungsverfahren zur Steuerung der Herstellung von Wafern in der Halbleitertechnologie. Gemäß diesem Stand der Technik werden die Merkmale nicht in verschiedene Gruppen eingeteilt, so dass dieses Verfahren in Bezug auf Abtastraten sich lediglich auf Einzelmessungen bezieht. Auch dieses zum Stand der Technik gehörende Verfahren kann weiter verbessert werden.

Weiterhin gehört zum Stand der Technik (US 2009/005896 A1) ein Managementsystem sowie ein System und ein Verfahren zum Erhöhen der Auslastung von Fertigungsressourcen als Reaktion auf WIP-Anforderungen (Workin-Process).

Bei diesem zum Stand der Technik gehörenden Verfahren werden Abtastraten von Metrologie-Messungen geändert, um WIP-Blasen schnell zu erkennen, und darauf zu reagieren, wodurch ihre Auswirkungen auf die Fertigungslinie reduziert werden. Gemäß diesem Verfahren wird die verfügbare Metrologie-Kapazität von einer Steuereinheit bestimmt. Die Steuereinheit legt dann, basierend auf der verfügbaren Kapazität eine neue Abtastrate fest. Nicht alle Lose weisen eine gleiche Überspringrate auf. Ist die WIP-Blase aufgelöst und die Warteschlange vor dem aktuellen Prozessschritt erreicht ein normales Niveau, wird der Prozess deaktiviert und der normale Prozess wird wieder aufgenommen. Dieses zum Stand der Technik gehörende Verfahren weist den Nachteil auf, dass Prüfraten ausschließlich aufgrund der Metrologie-Kapazitäten festgelegt werden und nicht in Abhängigkeit von Genauigkeitsanforderungen an gestellte Merkmale eines Werkstückes.

Das der Erfindung zugrundeliegende technische Problem besteht darin, dieses zum Stand der Technik gehörende Verfahren weiter zu verbessern, dahingehend, dass die Anzahl der Prüfungen und damit die Prüfzeit reduziert werden kann.

Dieses technische Problem wird durch ein Verfahren mit den Merkmalen gemäß Anspruch 1 gelöst.

Das erfindungsgemäße Verfahren zur Qualitätskontrolle von Werkstücken mit verschiedenen Merkmalen und/oder verschiedenen Merkmalsparametern, bei dem eine Stichprobenprüfung der Merkmale und/oder Merkmalsparameter durchgeführt wird,
a) bei dem die zu messenden Merkmale und/oder Merkmalsparameter für die Stichprobenprüfung festgelegt werden,
b) bei dem eine Losgröße eines Loses festgelegt wird,
c) bei dem die festgelegten Merkmale und/oder Merkmalsparameter stichprobenartig in Abhängigkeit von der Losgröße gemessen werden,
d) bei dem in Abhängigkeit von dem Ergebnis der Messung der Stichprobenprüfung des vorhergehenden Loses eine Prüfvorschrift für das nächste Los festgelegt wird,
wobei in Schritt a) zusätzlich wenigstens zwei Gruppen von Merkmalen und/oder Merkmalsparametern festgelegt werden, bei dem die Schritte c) und d) wiederholt werden, wobei zum Vermessen ein erster Sensor eingesetzt wird, zeichnet sich dadurch aus, dass für sämtliche Merkmale und/oder Merkmalsparameter einer Gruppe die Prüfvorschrift in Abhängigkeit von dem Ergebnis der Messung des vorhergehenden Loses festgelegt wird, und dass bei Veränderung der Prüfvorschrift auch eine Art der Messung verändert wird, wobei zum Vermessen nicht nur der erste Sensor sondern auch ein zweiter Sensor eingesetzt wird.

Durch dieses erfindungsgemäße Verfahren ist es möglich, die Qualität der Stichprobenprüfung deutlich zu erhöhen und gleichzeitig den Prüfaufwand zu verringern.

Dies wird dadurch erreicht, dass die Merkmale und/oder Merkmalsparameter in Gruppen festgelegt werden und dass ein Zurückfallen in einen höheren Prüfmodus oder ein Anheben in einen geringeren Prüfmodus für die entsprechende Gruppe von Merkmalen und/oder Merkmalsparametern durchgeführt wird. Es werden nicht sämtliche Merkmale und Merkmalsparameter in einen anderen Prüfmodus verschoben.

Das erfindungsgemäße Verfahren läuft also folgenderma-βen ab:
a) Es werden die zu messenden Merkmale und/oder Merkmalsparameter für die Stichprobenprüfung festgelegt und es werden zusätzlich die Merkmale und/oder Merkmalsparameter in Gruppen festgelegt. Vorteilhaft korrelieren die Merkmale und/oder Merkmalsparameter in diesen Gruppen.
b) Es wird eine Losgröße eines Loses festgelegt.
c) Die festgelegten Merkmale und/oder Merkmalsparameter werden stichprobenartig in Abhängigkeit von der Losgröße gemessen.
d) In Abhängigkeit von dem Ergebnis der Messung der Stichprobenprüfung des vorhergehenden Loses wird eine Prüfvorschrift für das nächste Los festgelegt. Diese Prüfvorschrift enthält beispielsweise, ob die Prüffrequenz erhöht oder verringert wird für bestimmte Gruppen von Merkmalen und/oder Merkmalsparametern.
e) Die Schritte c) und d) werden wiederholt.

Unter Merkmalen werden in dem Werkstück erzeugte Merkmale verstanden, wie zum Beispiel Bohrungen, Nuten, Gewinde oder dergleichen.

Unter Merkmalsparametern werden zum Beispiel geometrische Daten der Merkmale verstanden. Am Beispiel einer Bohrung können Merkmalsparameter zum Beispiel der Durchmesser der Bohrung, die Tiefe der Bohrung, die Lage der Bohrung im Werkstück in X- oder in Y-Richtung oder in Z-Richtung sein.

Ein Merkmalsparameter kann außerhalb der vorgegebenen Toleranzgrenzen liegen, indem beispielsweise der Durchmesser, die Tiefe oder dergleichen nicht den Sollwerten mit einer vorgegebenen Toleranzgrenze entspricht. Ein Merkmal kann außerhalb der vorgegebenen Toleranzgrenzen liegen, indem dieses Merkmal beispielsweise falsch oder überhaupt nicht ausgeführt ist. Bricht zum Beispiel ein Bohrer in einem vollautomatisierten Herstellungsprozess ab, wird keine Bohrung erzeugt.

Gemäß dem erfindungsgemäßen Verfahren werden nunmehr zum Beispiel das Merkmal "Bohrung" und die Merkmalsparameter "Durchmesser der Bohrung" und "Lage der Bohrung" (zum Beispiel in X-Richtung und/oder Y-Richtung und/oder Z-Richtung) in einer Gruppe eingruppiert. Zu Beginn des Verfahrens wird beispielsweise eine Losgröße von 50 Stück festgelegt. Die Merkmale der ersten Gruppe "Durchmesser" und "Lage" werden gemessen wie auch die "Tiefe" der Bohrung. Wird nun festgestellt, dass der Wert des Durchmessers außerhalb einer vorgegebenen Toleranzgrenze liegt, wird gemäß der neuen Prüfvorschrift mit einer höheren Prüffrequenz der Durchmesser überprüft, beispielsweise mit einer Losgröße von 25. Da sich der Merkmalsparameter "Lage" ebenfalls in dieser Gruppe befindet, wird automatisch dieser Merkmalsparameter ebenfalls auf eine höhere Prüffrequenz gesetzt, das heißt mit einer Losgröße von 25.

Der Merkmalsparameter "Tiefe" der Bohrung, der nicht der Gruppe "Durchmesser" und "Lage" zugeordnet ist und der bei der Messung mit der Losgröße von 50 innerhalb des vorgegebenen Toleranzwertes liegt bei dem vorgegebenen Beispiel, wird nicht auf eine höhere Prüffrequenz gesetzt. Die Prüffrequenz für diesen Merkmalsparameter bleibt. Liegt der Merkmalsparameter "Tiefe" zum Beispiel drei Mal innerhalb der vorgegebenen Toleranzgrenzen, kann die Prüffrequenz für diesen Merkmalsparameter weiter verringert werden, beispielsweise auf eine Losgröße von 100.

Wird bei dem vorgegebenen Beispiel festgestellt, dass der Merkmalsparameter "Tiefe" außerhalb der vorgegebenen Toleranzwerte liegt, kann auch für diese Gruppe, zu der dieser Merkmalsparameter gehört, die Prüffrequenz erhöht werden.

Wenn ein Merkmal und/oder ein Merkmalsparameter in einen höheren Prüfmodus zurückfällt oder in einen geringeren Prüfmodus gehoben wird, fallen gemäß der Erfindung sämtliche Merkmale und/oder Merkmalsparameter in diesen Prüfmodus. Der Prüfmodus bedeutet, dass eine höhere oder niedrigere Prüffrequenz verwendet wird. Welche Merkmale und/oder Merkmalsparameter mit der höheren oder niedrigeren Prüffrequenz gemessen werden, richtet sich nach den zu Beginn der Qualitätskontrolle festgelegten Gruppen von Merkmalen und/oder Merkmalsparametern.

Bei der Veränderung der Prüfvorschrift kann nicht nur der Prüfmodus, das heißt, die Prüffrequenz verändert werden. Im Rahmen der Prüfvorschrift wird auch die Art der Messung verändert, das heißt, dass beispielsweise mehr oder weniger Antastpunkte angetastet werden oder dass eine Messung nicht nur mit einem taktilen Sensor, sondern zum Beispiel auch mit einem optischen Sensor durchgeführt wird. Unter den Begriff "Prüfvorschrift" fallen sämtliche Bedingungen, die bei einer Prüfung eines Merkmales oder einer Merkmalskombination geändert werden können.

Gemäß dem erfindungsgemäßen Verfahren werden instabile Merkmale häufiger gemessen. Stabile Merkmale werden reduziert und/oder weniger oft gemessen. Darüber hinaus ist es gemäß dem erfindungsgemäßen Verfahren möglich, Messungen auszulassen (skippen).

Mit dem erfindungsgemäßen Verfahren ist es möglich, Prüfungen von Merkmalen und/oder Merkmalsparametern unter Berücksichtigung von anerkannten statistischen Verfahren zu reduzieren, um Kosten für weitere oder spezielle Messsysteme einzusparen.

Mit dem erfindungsgemäßen Verfahren kann eine Reduktion des Prüfungsaufwandes im automatisierten Umfeld erfolgen. Damit kann auf ein teures Sondermesssystem verzichtet werden. Stattdessen ist die Verwendung eines Standardkoordinatenmesssystems möglich. Das erfindungsgemäße Verfahren kann sowohl im automatischen Betrieb als auch in einem interaktiven Modus durchgeführt werden.

Das erfindungsgemäße Verfahren kann auch mit Verfahren aus dem Bereich der künstlichen Intelligenz erweitert werden, um die Dynamisierung mit maschinell erlerntem Wissen flexibler vorhersagen zu können.

Gemäß einer vorteilhaften Ausführungsform der Erfindung ist vorgesehen, dass bei Erfassung einer Anzahl n fehlerhafter Merkmale und/oder Merkmalsparameter einer Gruppe eine Prüffrequenz für sämtliche Merkmale und/oder Merkmalsparameter dieser Gruppe erhöht wird, wobei n ≥ 1.

Werden gemäß der vorteilhaften Ausführungsform bei wenigstens einem Merkmal und/oder wenigstens einem Merkmalsparameter einer Gruppe ein Fehler festgestellt, das heißt, die Messwerte liegen außerhalb vorgegebener Toleranzwerte, wird die Prüffrequenz für sämtliche Merkmale und/oder Merkmalsparameter dieser Gruppe erhöht. Hierbei kann im Vorhinein festgelegt werden, ob lediglich ein fehlerhaftes Merkmal und/oder ein fehlerhafter Merkmalsparameter vorliegen sollen oder mehrere fehlerhafte Merkmale und/oder Merkmalsparameter.

Gemäß einer anderen vorteilhaften Ausführungsform der Erfindung ist vorgesehen, dass wenigstens zwei Lose innerhalb einer Serie ohne Prüfung angenommen werden, wenn die Ergebnisse der Messung der Stichprobenprüfung bei einer festgelegten Anzahl k von unmittelbar vorausgehenden Losen festgelegte Kriterien für die Merkmale und/oder Merkmalsparameter erfüllen, wobei k ≥ 2.

Gemäß dieser Ausführungsform ist vorgesehen, dass für den Fall, dass die Ergebnisse der Messung der Merkmale und/oder Merkmalsparameter innerhalb von vorgegebenen Toleranzgrenzen liegen bei einer festgelegten Anzahl k von unmittelbar vorausgehenden Losen, die Prüffrequenz verringert wird, so dass wenigstens zwei Lose ohne Prüfung angenommen werden. Das bedeutet, dass zum Beispiel die Prüffrequenz verringert wird, wenn drei vorausgegangene Prüfungen ergeben haben, dass die Messwerte der vermessenden Merkmale und/oder Merkmalsparameter der drei vorausgegangenen Lose innerhalb der Toleranzgrenzen liegen. In diesem Fall kann die Prüffrequenz verringert werden.

Eine weitere vorteilhafte Ausführungsform der Erfindung sieht vor, dass gemäß der Prüfvorschrift sämtliche Merkmale und/oder Merkmalsparameter in eine höhere Prüffrequenz zurückfallen oder in eine geringere Prüffrequenz gehoben werden. Das bedeutet, dass, wenn bei den vorangegangenen Prüfungen festgestellt wurde, dass die Messwerte innerhalb der vorgegebenen Toleranzgrenzen liegen, sämtliche Merkmale und/oder Merkmalsparameter in eine geringere Prüffrequenz gehoben werden. Im umgekehrten Fall, wenn Messwerte erfasst werden von Merkmalen und/oder Merkmalsparametern, die außerhalb der Toleranzgrenzen liegen, fallen sämtliche Merkmale und/oder Merkmalsparameter der Gruppe in eine höhere Prüffrequenz zurück.

Da die Bildung der wenigstens zwei Gruppen mit den Merkmalen und/oder Merkmalsparametern vorteilhaft so durchgeführt wird, dass die Merkmale und/oder Merkmalsparameter in Abhängigkeit stehen, kann die Qualität der Stichprobenprüfung deutlich erhöht werden. Bei dem oben genannten Beispiel der Bohrung ist zum Beispiel davon auszugehen, dass, wenn die Lage der Bohrung nicht stimmt, dies einen Einfluss auf den Durchmesser der Bohrung hat, jedoch keinen Einfluss auf die Tiefe der Bohrung.

Das bedeutet, dass bei einer Abweichung der Merkmalsparameter "Lage" auch von einer Abweichung des Merkmalsparameters "Durchmesser" auszugehen ist. Diese Gruppe von Merkmalsparametern wird dann gemäß der Erfindung in eine höhere Prüffrequenz zurückfallen, während die Gruppe mit dem Merkmalsparameter "Tiefe" nicht in eine höhere Prüffrequenz zurückfällt, wodurch sich der gesamte Prüfaufwand gegenüber den zum Stand der Technik gehörenden Verfahren, bei dem sämtliche Merkmale und Merkmalsparameter auf eine höhere Prüffrequenz zurückfallen, geringer ist.

Eine weitere vorteilhafte Ausführungsform der Erfindung sieht vor, dass verschiedene Gruppen von Merkmalen und/oder Merkmalsparametern unterschiedliche Prüfvorschriften aufweisen können.

So ist es zum Beispiel möglich, dass eine erste Gruppe von Merkmalen und/oder Merkmalsparametern drei Bohrungen und die zugehörigen Merkmalsparameter "Lage", "Durchmesser" und "Tiefe" betreffen und dass eine zweite Gruppe sich auf eine Nut bezieht mit den Merkmalsparametern "Breite" und "Tiefe".

Für diese unterschiedlichen Gruppen können unterschiedliche Prüfvorschriften bestehen hinsichtlich der Prüffrequenz und/oder Losgröße.

Eine weitere vorteilhafte Ausführungsform der Erfindung sieht vor, dass für jede Kombination von Merkmalen und/oder Merkmalsparametern ein Korrelationskoeffizient ermittelt wird und dass Merkmale und/oder Merkmalsparameter mit demselben Korrelationskoeffizienten einer Gruppe von Merkmalen und/oder Merkmalsparametern zugeordnet werden.

Beispielsweise kann für ein bestimmtes Werkstück der Durchmesser einer Bohrung von besonderer Wichtigkeit sein, während zum Beispiel der Merkmalsparameter "Tiefe" eine untergeordnete Bedeutung spielt und die Toleranzgrenzen hierfür entsprechend größer sind.

Bei der Ermittlung der Korrelationskoeffizienten zwischen verschiedenen Merkmalen wird vorteilhaft der lineare Zusammenhang zwischen den Merkmalen ermittelt. Je nach zugrundeliegendem Verteilungsmodell der jeweiligen Merkmale können verschiedene Methoden zur Bestimmung der Korrelationskoeffizienten verwendet werden. Es kann der Korrelationskoeffizient nach Pearson ermittelt werden. Es kann auch eine Spearmansche Rangkorrelation oder eine Kendallsche Rangkorrelation durchgeführt werden. Andere Methoden der Berechnung des Korrelationskoeffizienten können ebenfalls angewendet werden.

Eine weitere vorteilhafte Ausführungsform der Erfindung sieht vor, dass ein Merkmal eines Werkstückes während eines Bearbeitungsverfahrens in dem Werkstück erzeugt wird. Es handelt sich hierbei um ein Merkmal wie beispielsweise eine Nut oder eine Bohrung oder ein Gewinde oder dergleichen.

Dieses Merkmal wird während eines Bearbeitungsverfahrens in dem Werkstück erzeugt. In der Regel wird anschließend die Qualitätskontrolle dieses Merkmales durchgeführt.

Eine weitere vorteilhafte Ausführungsform der Erfindung sieht vor, dass ein Merkmalsparameter eine geometrische Messgröße eines Merkmales ist. Bei einem Merkmalsparameter handelt es sich beispielsweise um Parameter wie "Tiefe", "Länge", "Durchmesser", "Lage" usw..

Gemäß einer weiteren vorteilhaften Ausführungsform der Erfindung liegt die Stichprobenprüfung zwischen einer Vollprüfung (100 %) oder einer Skip-Lot-Prüfung (0 %).

In der Regel wird zu Beginn eines Herstellungsverfahrens eines Werkstückes eine Vollprüfung durchgeführt, um zu überwachen, ob die Bearbeitungswerkzeuge die Merkmale und/oder Merkmalsparameter korrekt erzeugen. Wie schon ausgeführt, wird, wenn die Stichproben ergeben, dass die Messdaten der Merkmale und/oder Merkmalsparameter innerhalb der vorgegebenen Toleranzgrenzen liegen, die Losgröße vergrö-βert, das heißt die Prüffrequenz wird verringert. Dies geschieht schrittweise in Abhängigkeit von den erfassten Messwerten. Liegen diese jeweils innerhalb der vorgegebenen Toleranzgrenzen, wird die Prüffrequenz schrittweise verringert.

Gemäß einer besonders bevorzugten Ausführungsform der Erfindung wird die Stichprobenprüfung in einer Qualitätsregelkarte aufgezeichnet. Das heißt, dass gemäß der Erfindung die Messdaten der Stichprobenprüfung aufgezeichnet werden, und zwar in einer zu dem Werkstück gehörenden Qualitätsregelkarte. Die Qualitätsregelkarte kann in digitalisierter Form vorliegen. Hierdurch ist jederzeit der Prüfprozess nachvollziehbar dokumentiert.

Gemäß einer weiteren vorteilhaften Ausführungsform der Erfindung ist vorgesehen, dass in der Prüfvorschrift der Stichprobenumfang und die Prüffrequenz in Abhängigkeit von dem Ergebnis der Messung des vorhergehenden Loses festgelegt werden.

Gemäß dieser Ausführungsform wird in der Prüfvorschrift also festgelegt, mit welcher Prüffrequenz welche Gruppe stichprobenartig überprüft wird. Die Gruppe bestimmt den Stichprobenumfang, das heißt, welche Merkmale und/oder Merkmalsparameter mit welcher Prüffrequenz gemessen werden.

Eine weitere vorteilhafte Ausführungsform der Erfindung sieht vor, dass eine Visualisierung eines Prüfzustandes der Merkmale und/oder Merkmalsparameter erfolgt.

Wie schon ausgeführt, wird die Stichprobenprüfung vorzugsweise digital aufgezeichnet. Diese Stichprobenprüfung kann visualisiert werden, damit der Nutzer einen Überblick hat und die Software oder die Einstellungen überprüfen kann. Bei der Stichprobenüberwachung kann es erforderlich sein, manuell eine Nachregelung der Prüfvorschrift vorzunehmen.

Gemäß einer weiteren vorteilhaften Ausführungsform der Erfindung ist vorgesehen, dass die Merkmale und/oder Merkmalsparameter mit einem Koordinatenmessgerät gemessen werden.

Da Koordinatenmessgeräte mit einer sehr hohen Genauigkeit messen, ist es sinnvoll, die Merkmale und/oder Merkmalsparameter mit dem Koordinatenmessgerät zu vermessen. Die Messwerte können unmittelbar abgespeichert und/oder visualisiert werden. Das Bearbeitungsverfahren der Werkstücke sowie die Überprüfung der Werkstücke laufen vorteilhaft gemäß dem erfindungsgemäßen Verfahren vollautomatisiert ab. Mit dem erfindungsgemäßen Verfahren kann durch die Automatisierung eine Rückmeldung an das Messsystem gegeben werden, welche Merkmale zu prüfen sind bezogen auf den Ausgangsprüfplan.

Grundsätzlich besteht auch die Möglichkeit, eine Datei mit den Messwerten zu erzeugen. Die Messwerte können intern bearbeitet werden von dem Bearbeitungs- und Prüfsystem. Die Datei kann auch an ein externes Prüfsystem weitergegeben werden. Beispielsweise wäre eine Fernüberwachung des Bearbeitungs- und Prüfprozesses möglich.

Weiterhin besteht die Möglichkeit, dass das Prüfsystem automatisch eine Zuordnung der Merkmale und/oder Merkmalskombinationen zu einer Gruppe vornimmt. Wie schon ausgeführt, kann dies beispielsweise über einen Korrelationskoeffizienten erfolgen. Prinzipiell ist es auch möglich, dass die Merkmale und/oder Merkmalsparameter manuell den Gruppen zugeteilt werden.

Eine weitere vorteilhafte Ausführungsform der Erfindung sieht vor, dass die Merkmale und/oder Merkmalsparameter der Werkstücke nach jedem Bearbeitungsvorgang oder nach wenigstens zwei Bearbeitungsvorgängen oder nach der Fertigstellung des Werkstückes gemessen werden.

Da die Werkstücke zum Beispiel auf verschiedenen Werkzeugmaschinen hergestellt werden oder mit unterschiedlichen Werkzeugen, zum Beispiel eine Bohrung mit einem Bohrer und eine Nut mit einem Fräswerkzeug, kann nach wenigstens einem Bearbeitungsvorgang eine Überprüfung stattfinden. Es besteht aber auch die Möglichkeit, nach jedem Bearbeitungswerkzeug eine Überprüfung durchzuführen. Grundsätzlich besteht auch die Möglichkeit, die vollständig bearbeiteten Werkstücke zu vermessen.

Mit dem erfindungsgemäßen Verfahren ist es möglich, Werkstücke automatisiert herzustellen und anschließend automatisiert zu vermessen. Die Software, mit der das erfindungsgemäße Verfahren umgesetzt wird, liefert an das Koordinatenmessgerät die Daten, wie oft welche Merkmalsparameter und/oder Merkmale gemessen werden sollen.

Die Erfindung betrifft darüber hinaus ein Koordinatenmessgerät mit einem Sensor zum Vermessen eines Werkstückes und einer Auswerteeinrichtung, welche sich dadurch auszeichnet, dass die Auswerteeinrichtung ein Messergebnis des Sensors mittels des erfindungsgemäßen Verfahrens validiert.

Bei dem Koordinatenmessgerät kann es sich beispielsweise um ein Koordinatenmessgerät in Portalbauweise handeln.

Bei dem Koordinatenmessgerät können zur Messung ein schaltender Tastkopf, ein messender Tastkopf, ein optischer Tastkopf, ein optischer Sensor, ein Rauheitssensor und/oder ein Barghausensensor vorgesehen sein. Vorteilhaft werden die Tastköpfe oder Sensoren je nach Bedarf der Messaufgabe eingewechselt.

Die Erfindung betrifft auch ein Computerprogramm mit Programmcodemitteln, das dazu ausgebildet ist, sämtliche Schritte des erfindungsgemäßen Verfahrens auszuführen, wenn das Computerprogramm auf einem Computer ausgeführt ist. Heutzutage wird die Bearbeitung von Werkstücken vollautomatisiert durchgeführt. Die mittels des Koordinatenmessgerätes ermittelten Messwerte werden mit einem Computerprogramm ausgewertet. Das Computerprogramm kann die Steuerung des Verfahrens, insbesondere die Festlegung der Prüfvorschrift selbsttätig durchführen.

Weitere Merkmale und Vorteile der Erfindung ergeben sich anhand der zugehörigen Zeichnung, in der mehrere Ausführungsbeispiele des erfindungsgemäßen Verfahrens sowie ein Koordinatenmessgerät nur beispielhaft dargestellt sind. In der Zeichnung zeigen:
- Fig. 1: ein Koordinatenmessgerät in perspektivischer Ansicht;
- Fig. 2: ein Werkstück im Querschnitt;
- Fig. 3: das Werkstück in Draufsicht;
- Fig. 4: ein Los mit 10 Werkstücken schematisch dargestellt;
- Fig. 5: ein Ablaufdiagramm.

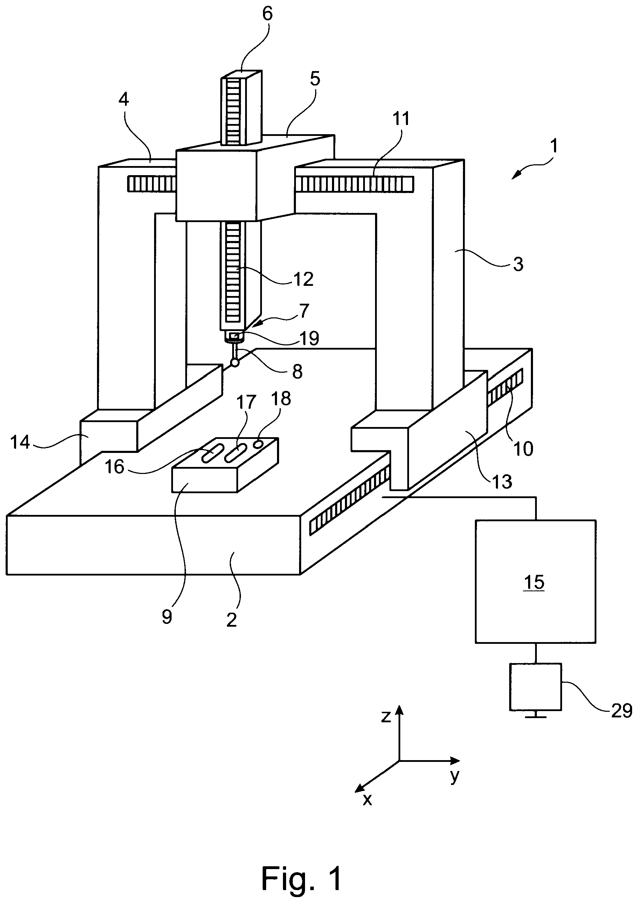

Fig. 1 zeigt ein Koordinatenmessgerät 1 in Portalbauweise mit einem Werktisch 2 und einem Portal 3. Das Portal 3 weist eine Traverse 4 auf, an der Traverse 4 ist ein Schlitten 5 angeordnet, an dem wiederum eine Pinole 6 angeordnet ist. Das Portal 3 ist in X-Richtung beweglich, der Schlitten 5 in Y-Richtung und die Pinole 6 in Z-Richtung. An der Pinole 6 ist ein Tastkopf 7 angeordnet, der einen Taststift 8 trägt. Auf dem Messtisch 2 des Koordinatenmessgerätes ist ein Werkstück 9 angeordnet.

An dem Messtisch 2 ist ein Maßstab 10 angeordnet, an der Traverse 4 ein Maßstab 11 und an der Pinole 6 ein Maßstab 12. Über entsprechende Wegmesssysteme (nicht dargestellt) kann die Position des Taststiftes 8 erfasst werden. Das Portal 3 weist Portalfüße 13, 14 auf, mit denen das Portal 3 an dem Messtisch 2 beweglich angeordnet ist. Über einen Computer 15, der auch eine Steuereinheit enthält, werden die Messwerte erfasst und verarbeitet.

An dem Computer 15 ist ein Monitor 29 angeschlossen, über den eine Visualisierung der Messwerte und der Messergebnisse der stichprobenartigen Prüfung erfolgt.

Grundsätzlich besteht auch die Möglichkeit, dass das Portal feststehend angeordnet ist und der Werkzeugtisch mit dem Werkstück relativ zu dem Portal verfahren wird.

Darüber hinaus ist auch bekannt, zum Beispiel einen Drehtisch auf dem Werkzeugtisch 2 anzuordnen.

Das Werkstück 9 weist zwei Nuten 16, 17 sowie eine Bohrung 18 auf.

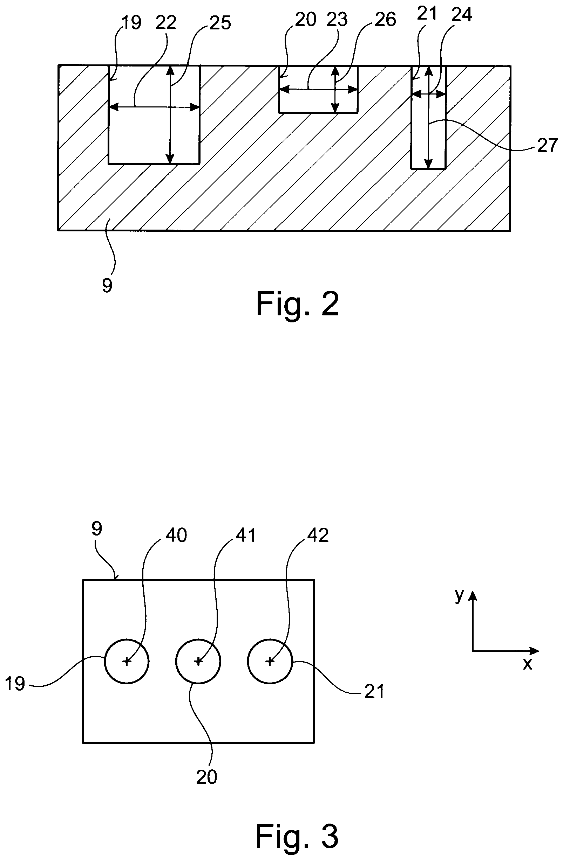

Fig. 2 zeigt schematisch ein Los 19, welches aus zehn Werkstücken 9 besteht. Die Nuten 16, 17 und die Bohrung 18 sind in Fig. 2 nicht dargestellt. Die Werkstücke 9 werden in einem fortlaufenden Produktionsprozess hergestellt.

Fig. 2 und Fig. 3 zeigen das Werkstück 9 mit drei Bohrungen 19, 20, 21. Die Bohrung 19 weist einen Durchmesser 22 auf, die Bohrung 20 einen Durchmesser 23 und die Bohrung 21 einen Durchmesser 24. Die Bohrung 19 weist eine Tiefe 25, die Bohrung 20 weist eine Tiefe 26 und die Bohrung 21 weist eine Tiefe 27 auf. Darüber hinaus kann von den Bohrungen 19, 20, 21 die Lage in X-, Y-Richtung dargestellt werden.

Hierbei wird gemäß Fig. 3 die Lage der Mittelpunkte 40, 41, 42 der Bohrungen 19, 20, 21 mit den Koordinaten *x*₁*y*₁, *x*₂*y*₂, *x*₃*y*₃ bestimmt.

Die Bohrungen 19, 20, 21 der Fig. 2 und 3 stellen Merkmale dar, während die Durchmesser 22, 23, 24 wie auch die Tiefen 25, 26, 27 oder die Lagen *x*₁*y*₁, *x*₂*y*₂, *x*₃*y*₃ Merkmalsparameter der Bohrungen 19, 20, 21 darstellen.

Diese Merkmale und Merkmalsparameter werden bei Produkten, das heißt im vorliegenden Fall, bei Werkstücken 9 einer fortlaufenden Produktion stichprobenartig überprüft.

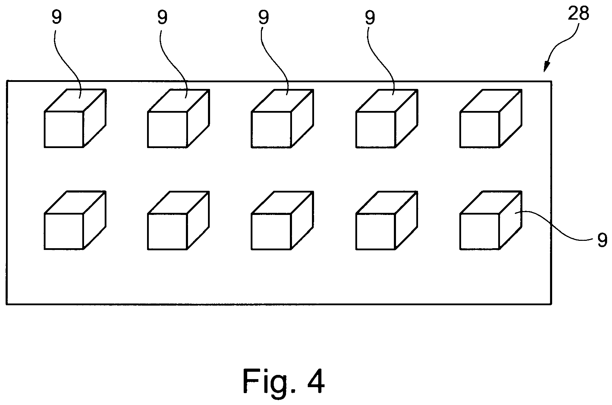

Für diese stichprobenartige Überprüfung wird ein Los festgelegt. Wie in Fig. 4 dargestellt, besteht das Los 28 aus zehn Werkstücken 9. Das bedeutet, dass bei diesem Los 28 das zehnte Werkstück 9 stichprobenartig überprüft wird. In Abhängigkeit von dem Ergebnis der Messung der Stichprobenprüfung dieses Loses 28 wird für das nachfolgende Los eine Prüfvorschrift festgelegt.

Zusätzlich werden vor dem Beginn der stichprobenartigen Prüfung Gruppen von Merkmalen 19, 20, 21 und/oder Merkmalsparametern 22 bis 27 festgelegt.

In dem Beispiel des Werkstückes 9 der Fig. 2 kann beispielsweise eine Gruppe von Merkmalsparametern und Merkmalen aus den beiden Bohrungen 19, 20 bestehen mit den Merkmalsparametern "Durchmesser" 22, 23 und den Merkmalsparametern "Tiefe" 25, 26.

Eine weitere Gruppe besteht aus dem Merkmal der Bohrung 21 und den Merkmalsparametern "Durchmesser" 24 und "Tiefe" 27.

Wird nun das Werkstück 9 stichprobenartig vermessen, bestehen folgende Möglichkeiten:
1) Sämtliche Merkmale und Merkmalsparameter liegen in den vorgegebenen Toleranzbereichen, das heißt, die Prüfung ist in Ordnung. In diesem Falle bleibt es bei der Prüfvorschrift, dass das nächste Los wieder zehn Werkstücke 9 umfasst und das zehnte Werkstück nach der gleichen Art und Weise vermessen wird.
   Sind die Stichprobenprüfungen drei Mal in Ordnung kann die Prüffrequenz verringert werden, das heißt, beim nächsten Mal wird die Losgröße beispielsweise auf 20 erhöht und es wird anschließend nur jedes 20. Werkstück vermessen.
2) Ein Merkmal 19, 20, 21 oder Merkmalsparameter 22, 23, 24, 25, 26, 27 liegt außerhalb der vorgegebenen Toleranzgrenze.
   Hier ist zu unterscheiden, welcher Gruppe das Merkmal oder Merkmalsparameter angehört, welches oder welcher außerhalb der Toleranzgrenze liegt.
   Liegt zum Beispiel der Merkmalsparameter "Durchmesser" 22 außerhalb der Toleranzgrenze, wird die Prüffrequenz erhöht, und zwar für sämtliche Merkmale und Merkmalsparameter dieser Gruppe, das heißt für die Merkmale 19, 20 und die Merkmalsparameter "Durchmesser" 22, 23 und die Merkmalsparameter 25, 26.
   Liegen die Merkmale 21 und die Merkmalsparameter 24, 27 beispielsweise im Toleranzbereich, bleibt für dieses Merkmal 21 und die Merkmalsparameter 24, 27 die Prüfvorschrift erhalten. Das bedeutet, dass die Bohrung 21 weiterhin bei jedem zehnten Werkstück überprüft wird, während zum Beispiel die Merkmale 19, 20 und/oder die Merkmalsparameter 22, 23, 25, 26 bei jedem fünften Werkstück 9 gemessen werden.

Ist eine vorgegebene Anzahl k von Prüfungen in Ordnung, wird die Prüffrequenz verringert. Liegen n fehlerhafte Merkmale und/oder Merkmalsparameter einer Gruppe vor, wird die Prüffrequenz für sämtliche Merkmale 19, 20; 21 und/oder Merkmalsparameter 22, 23, 25, 26; 24, 27 erhöht.

Durch dieses Verfahren ist es möglich, den Prüfaufwand insgesamt zu reduzieren, da lediglich die Gruppen von Merkmalen 19, 20, 21 und/oder Merkmalsparametern 22 bis 27 bezüglich der Prüffrequenz erhöht werden, wenn dort Abweichungen vorliegen, die über die vorgegebenen Toleranzgrenzen hinausgehen. Andere Merkmale, deren Messwerte im Toleranzbereich liegen, werden mit einer verringerten Prüffrequenz stichprobenartig überprüft.

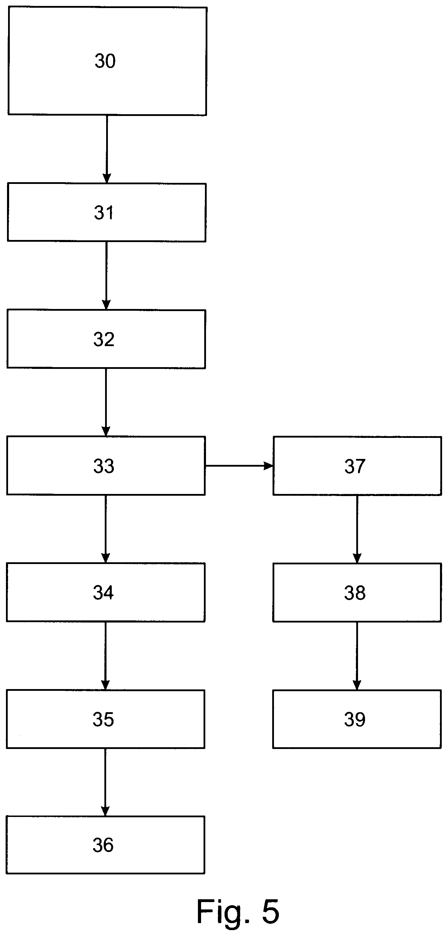

Wie in Fig. 5 dargestellt, wird in einem ersten Schritt 30 festgelegt, welche Merkmale und/oder Merkmalsparameter für die Stichprobenprüfung verwendet werden. Darüber hinaus werden zusätzlich Gruppen von Merkmalen und/oder Merkmalsparametern festgelegt. Im vorliegenden Beispiel die erste Gruppe mit den Merkmalen 19, 20 und die Merkmalsparameter 22, 23, 25, 26 sowie die zweite Gruppe mit dem Merkmal 21 und den Merkmalsparametern 24, 27.

Im Schritt 31 wird eine Losgröße festgelegt. Im vorliegenden Fall beispielsweise die Losgröße 10. Bei Werkstücken 9, die in großen Stückzahlen hergestellt werden, können die Losgrößen jedoch deutlich höher sein, beispielsweise 500 oder 1.000. Die Losgrößen können beliebig festgelegt werden.

Im nächsten Schritt 32 werden die festgelegten Merkmale 19, 20, 21 und die festgelegten Merkmalsparameter 22 bis 27 gemessen, und zwar stichprobenartig im vorliegenden Beispiel das zehnte Werkstück 9.

In einem Auswerteschritt 33, der von dem Computer 15 durchgeführt wird, wird überprüft, ob die Merkmale 19, 20, 21 und/oder Merkmalsparameter 22 bis 27 innerhalb der vorgegebenen Toleranzgrenzen liegen. Ist dies der Fall, wird im Schritt 34 wiederum das zehnte Werkstück gemessen. Liegen hierbei die Merkmale 19, 20, 21 und die Merkmalsparameter 22 bis 27 innerhalb der vorgegebenen Toleranzgrenzen, folgt der Schritt 35, gemäß dem wieder das zehnte Werkstück überprüft wird. Sind wieder sämtliche Merkmale 19, 20, 21 und Merkmalsparameter 22 bis 27 in Ordnung, wird von dem Computerprogramm die Losgröße hochgesetzt. Das heißt im Schritt 36 erfolgt lediglich noch die Prüfung nach 20 Werkstücken oder nach einer anderen vorgegebenen Prüffrequenz.

Weicht im Schritt 33 der Durchmesser 22 von den vorgegebenen Ist-Werten ab, so dass er außerhalb der Toleranzgrenzen liegt, wird für den Schritt 37 die Prüffrequenz für die Gruppe von Merkmalen 19, 20 und die Merkmalsparameter 22, 25, 23, 26 erhöht, beispielsweise auf jedes fünfte Werkstück 9.

Liegen bei den weiteren Prüfungen, beispielsweise aufgrund einer Korrektur des Bearbeitungswerkzeuges (nicht dargestellt) die Merkmale 19, 20 und die Merkmalsparameter 22, 25, 23, 26 wieder im Toleranzbereich, wird im Schritt 38 dennoch gemäß der erhöhten Prüffrequenz nach fünf Werkstücken wieder gemessen. Sind diese Messwerte wieder in Ordnung und liegen innerhalb der Toleranzgrenzen, kann im Schritt 39 die Prüffrequenz wieder verringert werden, beispielsweise auf jedes zehnte Werkstück für diese Gruppe von Merkmalen 19, 20 und Merkmalsparametern 22, 23, 25, 26.

Grundsätzlich besteht die Möglichkeit, die Prüffrequenz nach einem vorgegebenen Schema zu erhöhen oder zu verringern. Darüber hinaus kann im Vorfeld festgelegt werden, nach wie vielen Messungen eine Prüffrequenz verringert wird. Es ist zum Beispiel festlegbar, dass die Prüffrequenz erst verringert wird, wenn zehn Stichproben innerhalb der vorgegebenen Toleranzwerte gelegen haben.

Weiterhin besteht die Möglichkeit, dass die einzelnen Merkmale 19, 20, 21 und/oder Merkmalsparameter 20 bis 27 einen Korrelationskoeffizienten erhalten. Dieser Korrelationskoeffizient kann festlegen, welche Wertigkeit die Einhaltung der Toleranzgrenzen bei diesem Merkmal 19, 20, 21 oder den Merkmalsparametern 22 bis 27 hat. So können zum Beispiel die Bohrungen 19, 21 denselben Korrelationskoeffizienten erhalten und die Bohrung 20 einen abweichenden. In diesem Falle werden die Bohrungen 19, 21, die denselben Korrelationskoeffizienten aufweisen, einer Gruppe zugeordnet, während die Bohrung 20 einer anderen Gruppe zugeordnet wird.

Das stichprobenartige Prüfverfahren läuft dann wie oben beschrieben ab.

### Bezugszahlen

- 1: Koordinatenmessgerät
- 2: Werkzeugtisch
- 3: Portal
- 4: Traverse
- 5: Schlitten
- 6: Pinole
- 7: Tastkopf
- 8: Taststift
- 9: Werkstück
- 10: Maßstab
- 11: Maßstab
- 12: Maßstab
- 13: Portalfuß
- 14: Portalfuß
- 15: Computer
- 16: Nut
- 17: Nut
- 18: Bohrung
- 19: Bohrung
- 20: Bohrung
- 21: Bohrung
- 22: Durchmesser
- 23: Durchmesser
- 24: Durchmesser
- 25: Tiefe
- 26: Tiefe
- 27: Tiefe
- 28: Los
- 29: Monitor
- 30: Verfahrensschritt
- 31: Verfahrensschritt
- 32: Verfahrensschritt
- 33: Verfahrensschritt
- 34: Verfahrensschritt
- 35: Verfahrensschritt
- 36: Verfahrensschritt
- 37: Verfahrensschritt
- 38: Verfahrensschritt
- 39: Verfahrensschritt
- 40: Mittelpunkt
- 41: Mittelpunkt
- 42: Mittelpunkt

## Patentansprüche

1. Verfahren zur Qualitätskontrolle von Werkstücken (9) mit verschiedenen Merkmalen (19, 20, 21) und/oder verschiedenen Merkmalsparametern (22 bis 27), bei dem eine Stichprobenprüfung der Merkmale (19, 20, 21) und/oder Merkmalsparameter (22 bis 27) durchgeführt wird,
a) bei dem die zu messenden Merkmale (19, 20, 21) und/oder Merkmalsparameter (22 bis 27) für die Stichprobenprüfung festgelegt werden,
b) bei dem eine Losgröße eines Loses (28) festgelegt wird,
c) bei dem die festgelegten Merkmale (19, 20, 21) und/oder Merkmalsparameter (22 bis 27) stichprobenartig in Abhängigkeit von der Losgröße gemessen werden,
d) bei dem in Abhängigkeit von dem Ergebnis der Messung der Stichprobenprüfung des vorhergehenden Loses (28) eine Prüfvorschrift für das nächste Los festgelegt wird,
wobei in Schritt a) zusätzlich wenigstens zwei Gruppen von Merkmalen (19, 20, 21) und/oder Merkmalsparametern (22 bis 27) festgelegt werden, bei dem die Schritte c) und d) wiederholt werden, wobei zum Vermessen ein erster Sensor eingesetzt wird,
**dadurch gekennzeichnet, dass** für sämtliche Merkmale (19, 20, 21) und/oder Merkmalsparameter (22 bis 27) einer Gruppe die Prüfvorschrift in Abhängigkeit von dem Ergebnis der Messung des vorhergehenden Loses (28) festgelegt wird, und dass bei Veränderung der Prüfvorschrift auch eine Art der Messung verändert wird, wobei zum Vermessen nicht nur der erste Sensor sondern auch ein zweiter Sensor eingesetzt wird.

2. Verfahren nach Anspruch 1, **dadurch gekennzeichnet, dass** bei Erfassung einer Anzahl n fehlerhafter Merkmale (19, 20, 21) und/oder Merkmalsparameter (22 bis 27) einer Gruppe eine Prüffrequenz für sämtliche Merkmale (19, 20, 21) und/oder Merkmalsparameter (22 bis 27) dieser Gruppe erhöht wird, wobei n ≥ 1.

3. Verfahren nach Anspruch 1, **dadurch gekennzeichnet, dass** wenigstens zwei Lose innerhalb einer Serie ohne Prüfung angenommen werden, wenn die Ergebnisse der Messung der Stichprobenprüfung bei einer festgelegten Anzahl k von unmittelbar vorausgehenden Losen festgelegte Kriterien für die Merkmale (19, 20, 21) und/oder Merkmalsparameter (22 bis 27) erfüllen, wobei k ≥ 2.

4. Verfahren nach einem der vorhergehenden Ansprüche, **dadurch gekennzeichnet, dass** gemäß der Prüfvorschrift sämtliche Merkmale (19, 20, 21) und/oder Merkmalsparameter (22 bis 27) einer Gruppe in eine höhere Prüffrequenz zurückfallen oder in eine geringere Prüffrequenz gehoben werden.

5. Verfahren nach einem der vorhergehenden Ansprüche, **dadurch gekennzeichnet, dass** verschiedene Gruppen von Merkmalen (19, 20, 21) und/oder Merkmalsparametern (22 bis 27) unterschiedliche Prüfvorschriften aufweisen können.

6. Verfahren nach einem der vorhergehenden Ansprüche, **dadurch gekennzeichnet, dass** für jede Kombination von Merkmalen (19, 20, 21) und/oder Merkmalsparametern (22 bis 27) ein Korrelationskoeffizient ermittelt wird, und dass Merkmale (19, 20, 21) und/oder Merkmalsparameter (22 bis 27) mit demselben Korrelationskoeffizienten einer Gruppe von Merkmalen (19, 20, 21) und/oder Merkmalsparametern (22 bis 27) zugeordnet werden.

7. Verfahren nach einem der vorhergehenden Ansprüche, **dadurch gekennzeichnet, dass** ein Merkmal (19, 20, 21) eines Werkstückes (9) während eines Bearbeitungsverfahrens in dem Werkstück (9) erzeugt wird.

8. Verfahren nach einem der vorhergehenden Ansprüche, **dadurch gekennzeichnet, dass** ein Merkmalsparameter (22 bis 27) eine geometrische Messgröße eines Merkmales (19, 20, 21) ist.

9. Verfahren nach einem der vorhergehenden Ansprüche, **dadurch gekennzeichnet, dass** die Stichprobenprüfung zwischen einer Vollprüfung (100 %) und einer Skip-Lot-Prüfung (0 %) liegt.

10. Verfahren nach einem der vorhergehenden Ansprüche, **dadurch gekennzeichnet, dass** die Stichprobenprüfung in einer Qualitätsregelkarte aufgezeichnet wird.

11. Verfahren nach einem der vorhergehenden Ansprüche, **dadurch gekennzeichnet, dass** in der Prüfvorschrift der Stichprobenumfang und die Prüffrequenz in Abhängigkeit von dem Ergebnis der Messung des vorhergehenden Loses (28) festgelegt werden.

12. Verfahren nach einem der vorhergehenden Ansprüche, **dadurch gekennzeichnet, dass** eine Visualisierung eines Prüfzustandes der Merkmale (19, 20, 21) und/oder Merkmalsparameter (22 bis 27) erfolgt.

13. Verfahren nach einem der vorhergehenden Ansprüche, **dadurch gekennzeichnet, dass** die Merkmale (19, 20, 21) und/oder Merkmalsparameter (22 bis 27) mit einem Koordinatenmessgerät (1) gemessen werden.

14. Verfahren nach einem der vorhergehenden Ansprüche, **dadurch gekennzeichnet, dass** die Merkmale (19, 20, 21) und/oder Merkmalsparameter (22 bis 27) der Werkstücke (9) nach jedem Bearbeitungsvorgang oder nach wenigstens zwei Bearbeitungsvorgängen oder nach der Fertigstellung des Werkstückes (9) gemessen werden.

15. Koordinatenmessgerät mit einem Sensor zum Vermessen eines Werkstückes (9) und einer Auswerteeinrichtung (15), **dadurch gekennzeichnet, dass** die Auswerteeinrichtung (15) ein Messergebnis des Sensors (7) mittels eines Verfahrens nach einem der Ansprüche 1 bis 14 validiert.

16. Computerprogramm mit Programmcodemitteln, das dazu ausgebildet ist, sämtliche Schritte eines Verfahrens nach einem der Ansprüche 1 bis 14 auszuführen, wenn das Computerprogramm auf einem Computer (15) ausgeführt wird.

## Claims

1. Method for the quality control of workpieces (9) having different features (19, 20, 21) and/or different feature parameters (22 to 27), in which a sampling inspection of the features (19, 20,21) and/or feature parameters (22 to 27) is carried out,
a) in which the features (19, 20, 21) and/or feature parameters (22 to 27) to be measured are specified for the sampling inspection,
b) in which a lot size of a lot (28) is specified,
c) in which the specified features (19, 20, 21) and/or feature parameters (22 to 27) are measured in the manner of a sampling inspection on the basis of the lot size,
d) in which an inspection specification for the next lot is specified on the basis of the result of the measurement of the sampling inspection of the previous lot (28),
wherein at least two groups of features (19, 20, 21) and/or feature parameters (22 to 27) are additionally specified in step a), in which steps c) and d) are repeated, wherein a first sensor is used for the measurement,
**characterised in that**
for all the features (19, 20, 21) and/or feature parameters (22 to 27) of a group, the inspection specification is specified on the basis of the result of the measurement of the previous lot (28), and **in that**, when the inspection specification is changed, a type of measurement is also changed, wherein not only the first sensor but also a second sensor is used for the measurement.

2. Method according to claim 1, **characterised in that**, when a number n of non-conforming features (19, 20, 21) and/or feature parameters (22 to 27) of a group is detected, an inspection frequency is increased for all the features (19, 20, 21) and/or feature parameters (22 to 27) of that group, where n ≥ 1.

3. Method according to claim 1, **characterised in that** at least two lots within a series are accepted without an inspection if the results of the measurement of the sampling inspection satisfy specified criteria for the features (19, 20, 21) and/or feature parameters (22 to 27) in a specified number k of immediately preceding lots, where k ≥ 2.

4. Method according to any of the preceding claims, **characterised in that**, in accordance with the inspection specification, all the features (19, 20, 21) and/or feature parameters (22 to 27) of a group revert to a higher inspection frequency or are boosted to a lower inspection frequency.

5. Method according to any of the preceding claims, **characterised in that** different groups of features (19, 20, 21) and/or feature parameters (22 to 27) can have different inspection specifications.

6. Method according to any of the preceding claims, **characterised in that** a coefficient of correlation is ascertained for each combination of features (19, 20, 21) and/or feature parameters (22 to 27), and **in that** features (19, 20, 21) and/or feature parameters (22 to 27) having the same coefficient of correlation are allocated to one group of features (19, 20, 21) and/or feature parameters (22 to 27).

7. Method according to any of the preceding claims, **characterised in that** a feature (19, 20, 21) of a workpiece (9) is generated in the workpiece (9) during a machining process.

8. Method according to any of the preceding claims, **characterised in that** a feature parameter (22 to 27) is a geometric measured variable of a feature (19, 20, 21).

9. Method according to any of the preceding claims, **characterised in that** the sampling inspection lies between a one-hundred-percent inspection (100%) and a skip-lot inspection (0%).

10. Method according to any of the preceding claims, **characterised in that** the sampling inspection is recorded in a quality control chart.

11. Method according to any of the preceding claims, **characterised in that** the scope of the sampling inspection and the inspection frequency are specified in the test specification on the basis of the result of the measurement of the previous lot (28).

12. Method according to any of the preceding claims, **characterised in that** an inspection status of the features (19, 20, 21) and/or feature parameters (22 to 27) is visualised.

13. Method according to any of the preceding claims, **characterised in that** the features (19, 20, 21) and/or feature parameters (22 to 27) are measured using a coordinate measuring machine (1).

14. Method according to any of the preceding claims, **characterised in that** the features (19, 20, 21) and/or feature parameters (22 to 27) of the workpieces (9) are measured after each machining operation, after at least two machining operations or once the workpiece (9) is finished.

15. Coordinate measuring machine comprising a sensor for measuring a workpiece (9) and an evaluation device (15), **characterised in that** the evaluation device (15) validates a measurement result of the sensor (7) using a method according to any of claims 1 to 14.

16. Computer program comprising program code means configured to carry out all the steps of a method according to any of claims 1 to 14 when the computer program is executed on a computer (15).

## Revendications

1. Procédé de contrôle qualité de pièces (9) présentant différentes caractéristiques (19, 20, 21) et/ou différents paramètres de caractéristiques (22 à 27), dans lequel un contrôle par échantillonnage des caractéristiques (19, 20, 21) et/ou des paramètres de caractéristiques (22 à 27) est mis en oeuvre,
a) dans lequel les caractéristiques (19, 20, 21) et/ou les paramètres de caractéristiques (22 à 27) à mesurer sont spécifiés en vue du contrôle par échantillonnage,
b) dans lequel une taille de lot d'un lot (28) est spécifiée,
c) dans lequel les caractéristiques (19, 20, 21) et/ou les paramètres de caractéristiques (22 à 27) spécifiés sont mesurés par échantillonnage en fonction de la taille de lot,
d) dans lequel, en fonction du résultat de la mesure du contrôle par échantillonnage du lot précédent (28), une règle de contrôle est fixée pour le lot suivant,
dans lequel, à l'étape a), au moins deux groupes de caractéristiques (19, 20, 21) et/ou de paramètres de caractéristiques (22 à 27), pour lesquels les étapes c) et d) sont répétées, sont spécifiés de manière supplémentaire, un premier capteur étant utilisé pour effectuer des mesures,
**caractérisé en ce que**, pour toutes les caractéristiques (19, 20, 21) et/ou paramètres de caractéristiques (22 à 27) d'un groupe, la règle de contrôle est spécifiée en fonction du résultat de la mesure du lot précédent (28), et **en ce que** le type de mesure est également modifié à l'occasion de la modification de la règle de contrôle, dans lequel non seulement le premier capteur mais également un second capteur sont utilisés pour effectuer des mesures.

2. Procédé selon la revendication 1, **caractérisé en ce qu'**une fréquence de contrôle est augmentée pour toutes les caractéristiques (19, 20, 21) et/ou paramètres de caractéristiques (22 à 27) d'un groupe lors de la détection d'un nombre n de caractéristiques (19, 20, 21) et/ou de paramètres de caractéristiques (22 à 27) erroné(e)s d'un groupe, dans lequel n ≥ 1.

3. Procédé selon la revendication 1, **caractérisé en ce qu'**au moins deux lots au sein d'une série sont acceptés sans contrôle si les résultats de la mesure du contrôle par échantillonnage satisfont, en ce qui concerne les caractéristiques (19, 20, 21) et/ou les paramètres de caractéristiques (22 à 27), des critères spécifiés pour un nombre k spécifié de lots immédiatement précédents, dans lequel k ≥ 2.

4. Procédé selon l'une quelconque des revendications précédentes, **caractérisé en ce que**, conformément à la règle de contrôle, toutes les caractéristiques (19, 20 ; 21) et/ou paramètres de caractéristiques (22 à 27) d'un groupe diminuent lorsque la fréquence de contrôle est plus élevée ou augmentent lorsque la fréquence de contrôle est plus faible.

5. Procédé selon l'une quelconque des revendications précédentes, **caractérisé en ce que** différents groupes de caractéristiques (19, 20, 21) et/ou de paramètres de caractéristiques (22 à 27) peuvent présenter des règles de contrôle différentes.

6. Procédé selon l'une quelconque des revendications précédentes, **caractérisé en ce qu'**un coefficient de corrélation est déterminé pour chaque combinaison de caractéristiques (19, 20, 21) et/ou de paramètres de caractéristiques (22 à 27), et **en ce que** des caractéristiques (19, 20, 21) et/ou des paramètres de caractéristiques (22 à 27) présentant le même coefficient de corrélation sont associés à un groupe de caractéristiques (19, 20, 21) et/ou de paramètres de caractéristiques (22 à 27).

7. Procédé selon l'une quelconque des revendications précédentes, **caractérisé en ce qu'**une caractéristique (19, 20, 21) d'une pièce (9) est générée au sein de la pièce (9) lors d'un procédé d'usinage.

8. Procédé selon l'une quelconque des revendications précédentes, **caractérisé en ce qu'**un paramètre de caractéristiques (22 à 27) est une grandeur de mesure géométrique d'une caractéristique (19, 20, 21).

9. Procédé selon l'une quelconque des revendications précédentes, **caractérisé en ce que** le contrôle par échantillonnage se situe entre un contrôle complet (100 %) et un contrôle par lots non successifs (0 %).

10. Procédé selon l'une quelconque des revendications précédentes, **caractérisé en ce que** le contrôle par échantillonnage est enregistré dans une carte de contrôle qualité.

11. Procédé selon l'une quelconque des revendications précédentes, **caractérisé en ce que** l'amplitude d'échantillonnage et la fréquence de contrôle sont spécifiées dans la règle de contrôle en fonction du résultat de la mesure du lot précédent (28).

12. Procédé selon l'une quelconque des revendications précédentes, **caractérisé en ce qu'**une visualisation d'un état de contrôle des caractéristiques (19, 20, 21) et/ou des paramètres de caractéristiques (22 à 27) est fournie.

13. Procédé selon l'une quelconque des revendications précédentes, **caractérisé en ce que** les caractéristiques (19, 20, 21) et/ou les paramètres de caractéristiques (22 à 27) sont mesurés avec un appareil de mesure de coordonnées (1).

14. Procédé selon l'une quelconque des revendications précédentes, **caractérisé en ce que** les caractéristiques (19, 20, 21) et/ou les paramètres de caractéristiques (22 à 27) des pièces (9) sont mesuré(e)s après chaque opération d'usinage ou après au moins deux opérations d'usinage ou après l'achèvement de la pièce (9).

15. Appareil de mesure de coordonnées comprenant un capteur permettant de mesurer une pièce (9) et un dispositif d'évaluation (15), **caractérisé en ce que** le dispositif d'évaluation (15) valide un résultat de mesure du capteur (7) au moyen d'un procédé selon l'une quelconque des revendications 1 à 14.

16. Programme informatique comprenant des moyens de code de programme et conçu pour mettre en œuvre toutes les étapes d'un procédé selon l'une quelconque des revendications 1 à 14 lorsque le programme informatique est exécuté sur un ordinateur (15).
